(19) Europäisches Patentamt
European Patent Office
Office européen des brevets

(11) **EP 4 545 485 A1**

(12) **EUROPEAN PATENT APPLICATION**
published in accordance with Art. 153(4) EPC

(43) Date of publication:
**30.04.2025 Bulletin 2025/18**

(21) Application number: 24772199.6

(22) Date of filing: 08.08.2024

(51) International Patent Classification (IPC):
*C01G 53/00* (2025.01)   *H01M 4/525* (2010.01)
*H01M 4/505* (2010.01)   *H01M 10/054* (2010.01)
*H01M 4/62* (2006.01)   *H01M 4/131* (2010.01)

(52) Cooperative Patent Classification (CPC):
Y02E 60/10

(86) International application number:
**PCT/CN2024/110617**

(87) International publication number:
**WO 2025/050917 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 07.09.2023 CN 202311151572

(71) Applicant: Shenzhen BTR New Energy Technology Research Institute Co., Ltd.
Shezhen, Guangdong 518000 (CN)

(72) Inventors:
• LUO, Yiqi
  Shenzhen, Guangdong 518000 (CN)
• WU, Yun
  Shenzhen, Guangdong 518000 (CN)
• CHEN, Long
  Shenzhen, Guangdong 518000 (CN)
• LI, Zikun
  Shenzhen, Guangdong 518000 (CN)
• HUANG, Youyuan
  Shenzhen, Guangdong 518000 (CN)

(74) Representative: Valet Patent Services Limited
c/o Caya 83713X
Am Börstig 5
96052 Bamberg (DE)

(54) **POSITIVE ELECTRODE ACTIVE MATERIAL, AND PREPARATION METHOD THEREFOR AND USE THEREOF**

(57)    This application relates to a cathode active material and a preparation method therefor and an application thereof. A chemical formula of the cathode active material is $Na_xNiaFe_bMn_cM_aO_2$, wherein $a+b+c+d=1$, $0.7 \leq x < 0.9$, $0.01 \leq a \leq 0.5$, $0.01 \leq b \leq 0.4$, $0.2 \leq c < 1$, $0 \leq d \leq 0.2$. A doping element M is a metal element, a valence state of which is less than or equal to bivalence. The cathode active material is a layered oxide with a double crystal domain structure. The double crystal domain structure includes a P2 principal phase and an O3 heterogeneous phase. The crystal domain heterogeneity degree of the cathode active material meets: $0 < \omega \leq 0.48$,

$$\omega = \frac{1}{k \cdot \delta \cdot e^{\varepsilon(\emptyset - T)} + 1}$$ . The cathode active material is the layered oxide with the double crystal domain structure, and the cathode active material meeting the crystal domain heterogeneity degree has a higher capacity of separating sodium ions and has a higher specific capacity, the stability of the material is better enhanced.

FIG. 1

EP 4 545 485 A1

**Description**

**CROSS-REFERENCES OF RELATED APPLICATION**

This application claims the priority of Chinese patent application for invention No. CN 202311151572.5, filed September 7, 2023, and titled "Cathode active material and preparation method therefor and application thereof," the disclosure of which is hereby incorporated herein in its entirety by this reference.

**TECHNICAL FIELD**

This application relates to the technical field of sodium ion batteries, and particularly relates to a cathode active material and a preparation method therefor and an application thereof.

**BACKGROUND**

Due to restrictions of factors such as shortage of conventional fossil energy and energy safety and enhancement on protection concept of the ecological environment, sustainable development and utilization and storage of energy sources are highly valued by countries in the world. In various energy storage systems, thanks to advantages of long service life, low cost, little investment, easy installation, and the like, an electrochemical energy storage system (EES) is considered an effective method to balance cycle performance of renewable energy sources. Secondary batteries in electrochemical energy storage have a huge potential. Lithium ion batteries dominate the energy storage market as a result of high theoretical specific capacity and specific energy density. However, due to limited reserve and uneven distribution of lithium (Li) resources and consumption of lithium in multiple aspects, restricted by objective factors such as lithium extraction technology, geographical environment, and traffic condition, there still exists a bottleneck in lithium resources in the power battery filed. Undersupply of lithium resources results in rise in price. Continuous rise in lithium price will accelerate a process of seeking for substitute goods with higher cost performance by enterprises. Besides reducing carbon emission and solving the environmental problems, the object to develop new energy automobiles energetically in China is also to reduce dependency on import of conventional fossil fuel. If the resource bottleneck problem cannot be solved, a certain discount will be given to meaning of developing electric automobiles. Besides the lithium resources, other links of lithium batteries, for example, cobalt and nickel, also face the problems of import dependence and large fluctuation of price. To alleviate the problem, a concept of replacing lithium with elements with large abundance such as sodium (Na), potassium (K), magnesium (Mg), Aluminum (Al), and calcium (Ca) has been proposed in the related art to prepare a new generation of secondary ion batteries which are low in cost and environmental-friendly. To develop sodium ion batteries is strategically significant at the country level. Sodium ion batteries have been focused and supported by increasingly more countries.

A sodium-based layered oxide cathode material is one of the most critical materials for sodium ion batteries. Similar to lithium cobalt oxides and ternary structures of lithium ion batteries, the layered oxide structure has a good ion channel, with probably a certain dead end in cycle performance, but the average maturity is relatively high. A transition metal oxide $Na_xMeO_2$ is an embedded or intercalated compound. It has a higher specific discharge capacity theoretically but poor cycle performance. By introducing active or inert elements for doping or substituting, the defect can be improved. The type of the layered oxide mainly includes O2 type, O3 type, P2 type, and P3 type, where O or P represents the position of $Na^+$ in an octahedron or a prism, and figures represent repeatedly arranged units of different oxide layers. O3 type and P2 type are relatively stable phase structures. There is much work conducted for these two types. Compared with its electrochemical performance, although there are some differences, in a word, a transition metal oxide system is still a route with relatively high maturity at present.

The types in the layered oxide materials of existing sodium ion batteries are significant in defect (the O3 type material is high in capacity, low in first effect, and poor in cycle performance, and often has problems of massive aerogenesis, metal dissolution, and structure evolution in a total battery application process; the P2 type material is relatively low in initial charge capacity, but is good in cycle performance and rate performance; and the P3 type material is low in capacity, poor in cycle, high in working voltage, and the like), so that the comprehensive performance is poor. The types are hardly combined together organically. Core-shell coating and direct blending methods in conventional methods often introduce new electrochemical inert substances or have new two-phase interfacial problem, which results in poor electrochemical performance of the material, thereby bringing resistance to industrial application of the sodium ion batteries.

**SUMMARY**

On this basis, to improve the electrochemical performance of a cathode material, it is necessary to provide a cathode active material and a preparation method therefor and an application thereof.

A chemical formula of the cathode active material is $Na_xNiaFe_bMn_cM_aO_2$, where $a+b+c+d=1$, $0.7 \leq x < 0.9$, $0.01 \leq a \leq 0.5$, $0.01 \leq b \leq 0.4$, $0.2 \leq c < 1$, $0 \leq d \leq 0.2$; a doping element M is a metal element, a valence state of which is less than or equal to bivalence;

the cathode active material is a layered oxide with a double crystal domain structure; the double crystal domain structure includes a P2 principal phase and an O3 heterogeneous phase; the crystal domain of the cathode active material meets: $0 < \omega \leq 0.48$, $\omega = \dfrac{1}{k \cdot \delta \cdot e^{\varepsilon(\emptyset - T)} + 1}$, where $\delta = I_p/I_O$, $I_p$ is a peak intensity of a diffraction peak of the P2 phase structure (002), and IO is a peak intensity of a diffraction peak of the O3 phase structure (104); $\emptyset = \dfrac{\emptyset_{TM}\emptyset_{Na}}{\emptyset_O{}^2}$ is a cation potential of the cathode material, wherein $\emptyset_{TM}$, $\emptyset_{Na}$, $\emptyset_O$ are respectively a non-sodium metallic element ion potential, a Na ion potential, and an oxygen ion potential of the cathode active material, where a non-sodium metal includes Ni, Fe, Mn, and M; a diffraction peak intensity correction factor k is =0.7, an ion potential correction factor $\varepsilon$ is =11, and a constant T is =0.476.

The cathode active material is the layered oxide with the double crystal domain structure, and the cathode active material meeting the crystal domain heterogeneity degree has a higher capacity of separating sodium ions and has a higher specific capacity. Moreover, the double crystal domain structure can relieve irreversible transition and interlayer slipping of the structure under a high voltage as massive sodium ions are separated, so that the stability of the material is better enhanced. The above integrally improves the electrochemical performance of the cathode active material in the technical solution of this application, which facilitates wide application.

In a feasible implementation, in the chemical formula $Na_xNi_aFe_bMn_cM_aO_2$ of the cathode active material, the doping element M is selected from at least one of Li, K, Rb, Be, Mg, Ca, Cu, Sr, and Zn.

In a feasible implementation, in the chemical formula $Na_xNi_aFe_bMn_cM_aO_2$ of the cathode active material, $0.7 \leq x \leq 0.8$, $0.01 \leq a \leq 0.4$, $0.01 \leq b \leq 0.35$, $0.3 \leq c < 0.8$, and $0 \leq d \leq 0.1$.

In a feasible implementation, in an X-ray diffraction result of the layered oxide, a peak position of the diffraction peak (002) of the P2 phase is present at $2\theta = 15.80 \pm 0.5°$, and a peak position of the diffraction peak (104) of the O3 phase is present at $2\theta = 41.5 \pm 0.5°$;

a particle size D50 of the cathode active material is 3-15 $\mu$m;
a specific surface area of the cathode active material is 0.2-2 $m^2$/g;
pH of the cathode active material is 11-13;
a tap density of the cathode active material is greater than 1.6 $g/cm^3$;
a mass content of $CO_3^{2-}$ in the cathode active material is $\leq 2$ wt%, and a mass content of $OH^-$ in the cathode active material is $\leq 2$wt%; and
a mass content of water in the cathode active material is $\leq 0.05$ wt%.

A method for preparing any one of the above cathode active materials, including the following steps:

based on a stoichiometric ratio of $Na_xNiaFe_bMn_cM_aO_2$, uniformly mixing a sodium salt, a nickel, ferric, and manganese-based precursor, and a precursor of a doping element M to obtain a sintered precursor; and
sintering the sintered precursor, and then crushing the same to obtain the cathode active material.

The preparation method for the cathode active material is simple, and the prepared cathode active material is the layered oxide with the double crystal domain structure, and the cathode active material meeting the crystal domain heterogeneity degree has a higher capacity of separating sodium ions and has a higher specific capacity. Moreover, the double crystal domain structure can relieve irreversible transition and interlayer slipping of the structure under a high voltage as massive sodium ions are separated, so that the stability of the material is better enhanced. The above integrally improves the electrochemical performance of the cathode active material in the technical solution of this application, which facilitates wide application.

In a feasible implementation, the nickel, ferric, and manganese-based precursor includes an oxide or hydroxide of nickel, an oxide or hydroxide of ferric, and an oxide or hydroxide of manganese; or the nickel, ferric, and manganese-based precursor is a nickel, ferric, and manganese-based hydroxide precursor prepared by a coprecipitation method; and the precursor of the doping element M is selected from at least one of an oxide of the doping element M, a sulfide of the doping element M, a nitride of the doping element M, and a carbonate of the doping element M.

In a feasible implementation, a mass of the sodium salt is 100-110 wt% by stoichiometry of Na needed; and the sodium salt is selected from at least one of anhydrous sodium carbonate, monohydrated sodium carbonate, sodium carbonate decahydrate, sodium hydrogen carbonate, and sodium sulfate.

In a feasible implementation, in an operation of sintering the sintered precursor, a sintering temperature is 800-950°C, a sintering time is 12-24 h, and a sintering atmosphere is selected from at least one of air and oxygen.

A cathode plate, including any one of the above cathode active materials.

The cathode plate in the technical solution of this application includes the cathode active material. The cathode active material is the layered oxide with the double crystal domain structure, and the cathode active material meeting the crystal domain heterogeneity degree has a higher capacity of separating sodium ions and has a higher specific capacity. Moreover, the double crystal domain structure can relieve irreversible transition and interlayer slipping of the structure under a high voltage as massive sodium ions are separated, so that the stability of the material is better enhanced. The above integrally improves the electrochemical performance of the cathode active material in the technical solution of this application, so that the electrochemical performance of the cathode plate is improved, which facilitates wide application.

A sodium ion secondary battery, including the cathode plate.

The sodium ion secondary battery in the technical solution of this application includes the cathode plate. The cathode plate in the technical solution of this application includes the cathode active material. The cathode active material is the layered oxide with the double crystal domain structure, and the cathode active material meeting the crystal domain heterogeneity degree has a higher capacity of separating sodium ions and has a higher specific capacity. Moreover, the double crystal domain structure can relieve irreversible transition and interlayer slipping of the structure under a high voltage as massive sodium ions are separated, so that the stability of the material is better enhanced. The above integrally improves the electrochemical performance of the cathode active material in the technical solution of this application, so that the electrochemical performance of the sodium ion secondary battery is improved, which facilitates wide application.

## BRIEF DESCRIPTION OF THE DRAWINGS

FIG. 1 is an SEM image of a cathode active material of a sodium ion secondary battery prepared in an example 1 of this application;

FIG. 2 is an XRD diffraction image of the cathode active material of the sodium ion secondary battery prepared in the example 1 of this application;

FIG. 3 is an SEM image of a cathode active material of a sodium ion secondary battery prepared in an example 3 of this application;

FIG. 4 is an XRD diffraction image of the cathode active material of the sodium ion secondary battery prepared in the example 3 of this application;

FIG. 5 is an XRD diffraction image of the cathode active material of the sodium ion secondary battery prepared in a comparative example 1 of this application;

FIG. 6 is a charging and discharging curve graph of a button cell made of the cathode active material of the sodium ion secondary battery prepared in the example 1 of this application at a rate of 2.0-4.1V 0.1C;

FIG. 7 is a charging and discharging curve graph of a button cell made of the cathode active material of the sodium ion secondary battery prepared in the example 3 of this application at a rate of 2.0-4.1V 0.1C;

FIG. 8 is a charging and discharging curve graph of a button cell made of the cathode active material of the sodium ion secondary battery prepared in the example 1 of this application at a rate of 2.0-4.1 V 0.1C.

## DETAILED DESCRIPTION OF THE EMBODIMENTS

In order to enable the above objects, features, and advantages of this application to be more apparent and easily understood, specific embodiments of this application will be described in detail below with reference to the accompanying drawings. Many specific details are set forth in the following description to facilitate full understanding of this application. However, this application can be practiced in many other ways than those described herein, and persons skilled in the art may make similar modifications without departing from the spirit of this application, and therefore this application is not to be limited by the specific embodiments disclosed below.

Unless defined otherwise, all technical and scientific terms used herein have the same meaning as commonly understood by persons of ordinary skill in the art to which this application belongs. The terms used herein in the specification of this application are for the purpose of describing specific embodiments only and are not intended to limit this application. As used herein, the term "and/or" includes any and all combinations of one or more relevant listed items.

A chemical formula of a cathode active material in an implementation is $Na_xNiaFe_bMn_cM_aO_2$, where a+b+c+d=1, $0.7 \leq x < 0.9$, $0.01 \leq a \leq 0.5$, $0.01 \leq b \leq 0.4$, $0.2 \leq c < 1$, $0 \leq d \leq 0.2$; a doping element M is a metal element, a valence state of which is less than or equal to bivalence.

The cathode active material is a layered oxide with a double crystal domain structure; the double crystal domain structure includes a P2 principal phase and an O3 heterogeneous phase; the crystal domain heterogeneity degree of the cathode active material meets: $0<\omega\leq0.48$, $\omega = \dfrac{1}{k\cdot\delta\cdot e^{\varepsilon(\varnothing-T)}+1}$ , where $\delta=I_p/I_O$, $I_p$ is a peak intensity of a diffraction peak of the P2 phase structure (002), and $I_O$ is a peak intensity of a diffraction peak of the O3 phase structure (104);

$\varnothing = \dfrac{\varnothing_{TM}\varnothing_{Na}}{\varnothing_O{}^2}$ is a cation potential of the cathode material, where $\varnothing_{TM}$, $\varnothing_{Na}$, $\varnothing_O$ are respectively a non-sodium metallic element ion potential, a Na ion potential, and an oxygen ion potential of the cathode active material, where a non-sodium metal includes Ni, Fe, Mn, and M; a diffraction peak intensity correction factor k is =0.7, an ion potential correction factor $\varepsilon$ is =11, and a constant T is =0.476. $\varnothing_{TM} = \sum \dfrac{\omega_i n_i}{R_i}$ , $\omega_i$, $n_i$, and $R_i$ are respectively a valence state, a mole percentage, and an ionic radius of the non-sodium metal ions, i is the number of the non-sodium metal ions, $\varnothing_{Na}=x/R_{Na}$, $\varnothing_O=4/R_O$.

As far as a mixed phase material is concerned, respective characteristic peak positions can be observed usually through the X-ray diffraction pattern. However, to represent the content ratio directly through a peak-to-intensity ratio is often inaccurate. According to differences of degree of crystallinity of different phase structures, there is a difference of coefficient between the peak-to-intensity ratio and the content ratio, i.e., $M_p/M_O=k\times I_p/I_O$. Therefore, the proportion (heterogeneity degree) of the O phase in the mixed system is $M_O/(M_P+M_O)$, i.e., $\dfrac{1}{k\cdot\delta+1}$, where $\delta=I_p/I_O$. On the other hand, it is found by the inventor of this application that such heterogeneity degree will change when the type and content of the doping element change, which is mainly because that the doping element changes the cation potential of the material as well and induces a partially induced impact on the proportion of the material in the phase structure synthetic process, thereby changing $\delta$. There is a cation potential correction factor of $e^{\varepsilon(\varnothing-T)}$. $\varepsilon(\varnothing - T)$ is 0 when there is no doping. Therefore, a creative study is performed to obtain the heterogeneity degree $\dfrac{1}{k\cdot\delta\cdot e^{\varepsilon(\varnothing-T)}+1}$ of the cathode active material of this application, where k is the diffraction peak intensity correction factor, and $\varepsilon$ and T are cation correction factors. The cathode active material meeting the crystal domain heterogeneity degree has a higher capacity of separating sodium ions and has a higher specific capacity. Moreover, the double crystal domain structure can relieve irreversible transition and interlayer slipping of the structure under a high voltage as massive sodium ions are separated, so that the stability of the material is better enhanced.

Based on the above implementation, in the chemical formula $Na_xNi_aFe_bMn_cM_aO_2$ of the cathode active material, the doping element M is selected from at least one of Li, K, Rb, Be, Mg, Ca, Cu, Sr, and Zn.

Based on the above implementation, in the chemical formula $Na_xNi_aFe_bMn_cM_aO_2$ of the cathode active material, $0.7\leq x\leq0.8$, $0.01\leq a\leq0.4$, $0.01\leq b\leq0.35$, $0.3\leq c<0.8$, and $0\leq d\leq0.1$. Preferably, $0.7\leq x\leq0.8$, $0.2\leq a\leq0.25$, $0.2b\leq0.25$, $0.45\leq c\leq0.55$, and $0\leq d\leq0.1$. In this case, a condition that the P2 phase structure is hardly formed as a result of a too high content of nickel and ferric can be avoided. x can be, for example, 0.7, 0.75 or 0.8, a can be, for example, 0.2, 0.225, 0.24 or 0.25, b can be, for example, 0.2, 0.225, 0.24 or 0.25, c can be, for example, 0.45, 0.48, 0.5 or 0.55, and d can be, for example, 0, 0.04, 0.05 or 0.1.

Based on the above implementation, in an X-ray diffraction result of the layered oxide, a peak position of the diffraction peak (002) of the P2 phase is present at $2\theta=15.80\pm0.5°$, and a peak position of the diffraction peak (104) of the O3 phase is present at $2\theta=41.5\pm0.5°$. Preferably, in an X-ray diffraction result of the layered oxide, a peak position of the diffraction peak (002) of the P2 phase is present at $2\theta=15.80\pm0.2°$, and a peak position of the diffraction peak (104) of the O3 phase is present at $2\theta=41.5\pm0.2°$. In this case, the less the deviation of the peak position is, the more accurate the test is.

Based on the above implementation, a particle size D50 of the cathode active material is 3-15 $\mu$m. Preferably, the particle size D50 of the cathode active material is 5-10 $\mu$m.

Based on the above implementation, a specific surface area SSA of the cathode active material is 0.2-2 $m^2/g$. Preferably, the specific surface area SSA of the cathode active material is 0.3-0.7 m2/g.

Based on the above implementation, pH of the cathode active material is 11-13.

Based on the above implementation, a tap density TD of the cathode active material is greater than 1.6g/$cm^3$. Preferably, the tap density TD of the cathode active material is 1.8-2.5 g/$cm^3$.

Based on the above implementation, a mass content of $CO_3{}^{2-}$ in the cathode active material is $\leq2$ wt%, and a mass content of $OH^-$ in the cathode material is $\leq2$ wt%.

Based on the above implementation, a mass content of water in the cathode active material is $\leq0.05$ wt%.

The cathode active material is the layered oxide with the double crystal domain structure, and the cathode active material meeting the crystal domain heterogeneity degree has a higher capacity of separating sodium ions and has a higher specific capacity. Moreover, the double crystal domain structure can relieve irreversible transition and interlayer slipping of the structure under a high voltage as massive sodium ions are separated, so that the stability of the material is better enhanced. The above integrally improves the electrochemical performance of the cathode active material in the technical solution of this application, which facilitates wide application.

In addition, compared with a pure P2 phase structure, the P2/O3 double crystal domain structure in the cathode active material provides an in-situ sodium supplementing site. In the charging and discharging processes, the damage to the original structure is less, the lattice mismatch is less, and a phenomenon that massive transition metals are dissolved after sodium supplementation is not easily caused. Moreover, thanks to a local confinement effect, irreversible transition of a small amount of O3 crystal domains in the charging and discharging processes is inhibited. Further, this structure can further effectively neutralize the interfacial stress generated by phase change in the charging and discharging processes, thereby reducing side reactions generated as the electrolyte permeates into the structure. Moreover, different from conventional P2/O3 phase blended/core-shell structure, the surface of the cathode active material with double crystal domain structure has a relatively low air sensitivity characteristic and has excellent processability.

A method for preparing the cathode active material in an implementation includes the following steps:
S10, based on a stoichiometric ratio of $Na_xNiaFe_bMn_cM_aO_2$, a sodium salt, a nickel, ferric, and manganese-based precursor, and a precursor of a doping element M are uniformly mixed to obtain a sintered precursor.

In a feasible implementation, a mass of the sodium salt is 100-110 wt% by stoichiometry of Na needed.

In a feasible implementation, the sodium salt is selected from at least one of anhydrous sodium carbonate, monohydrated sodium carbonate, sodium carbonate decahydrate, sodium hydrogen carbonate, and sodium sulfate. Preferably, the sodium salt is selected from at least one of anhydrous sodium carbonate, sodium hydrogen carbonate, and sodium sulfate.

In a feasible implementation, the nickel, ferric, and manganese-based precursor includes an oxide or hydroxide of nickel, an oxide or hydroxide of ferric, and an oxide or hydroxide of manganese.

In a feasible implementation, the nickel, ferric, and manganese-based precursor is a nickel, ferric, and manganese-based hydroxide precursor prepared by a coprecipitation method. In this case, the transition metal elements are advantageously distributed uniformly to avoid agglomeration of the principle element material in the mixing structure and prevent the locally uncontrollable poly-crystal domain structure from affecting the performance of the material as a result of segregation of the elements in the sintering process.

In a feasible implementation, the precursor of the doping element M is selected from at least one of an oxide of the doping element M, a sulfide of the doping element M, a nitride of the doping element M, and a carbonate of the doping element M.

In a feasible implementation, the sodium, the nickel, ferric, and manganese-based precursor and the precursor of the doping element M are uniformly mixed through mechanical mixing equipment. Further, the mechanical mixing equipment is a ball mill, a three-dimensional mixer, a high speed mixer or a VC mixer.

S20, the sintered precursor obtained in S10 is sintered, and then the precursor is crushed to obtain the cathode active material.

In a feasible implementation, in an operation of sintering the sintered precursor, a sintering temperature is 800-950°C, a sintering time is 12-24 h, and a sintering atmosphere is selected from at least one of air and oxygen. Preferably, the sintering temperature is 850-900°C, the sintering time is 12-20 h, and the sintering atmosphere is oxygen.

In a feasible implementation, the precursor is crushed by crushing equipment and is screened to obtain the cathode active material. Further, the crushing equipment is selected from at least one of a double roll crusher, a ball mill, a stone mortar mill, and a pneumatic cracker.

The preparation method for the cathode active material is simple, and the prepared cathode active material is the layered oxide with the double crystal domain structure, and the cathode active material meeting the crystal domain heterogeneity degree has a higher capacity of separating sodium ions and has a higher specific capacity. Moreover, the double crystal domain structure can relieve irreversible transition and interlayer slipping of the structure under a high voltage as massive sodium ions are separated, so that the stability of the material is better enhanced. The above integrally improves the electrochemical performance of the cathode active material in the technical solution of this application, which facilitates wide application.

A cathode plate in an implementation includes any one of the above cathode active materials. The cathode plate further includes a collector, a conductive additive coated to the collector, and a binder.

The cathode plate can be prepared by the following steps: the cathode active material, the conductive additive, and the binder are uniformly mixed, then the mixture is coated to the collector, and the mixture is dried to obtain the cathode plate.

The cathode plate in the technical solution of this application includes the cathode active material. The cathode active material is the layered oxide with the double crystal domain structure, and the cathode active material meeting the crystal domain heterogeneity degree has a higher capacity of separating sodium ions and has a higher specific capacity. Moreover, the double crystal domain structure can relieve irreversible transition and interlayer slipping of the structure under a high voltage as massive sodium ions are separated, so that the stability of the material is better enhanced. The above integrally improves the electrochemical performance of the cathode active material in the technical solution of this application, so that the electrochemical performance of the cathode plate is improved, which facilitates wide application.

A sodium ion secondary battery in an implementation includes any one of the above cathode plates. The sodium ion secondary battery in this application can be used for large energy storage, household energy storage, a two-wheeled cart, low speed electric automobile equipment.

The sodium ion secondary battery in the technical solution of this application includes the cathode plate. The cathode plate in the technical solution of this application includes the cathode active material. The cathode active material is the layered oxide with the double crystal domain structure, and the cathode active material meeting the crystal domain heterogeneity degree has a higher capacity of separating sodium ions and has a higher specific capacity. Moreover, the double crystal domain structure can relieve irreversible transition and interlayer slipping of the structure under a high voltage as massive sodium ions are separated, so that the stability of the material is better enhanced. The above integrally improves the electrochemical performance of the cathode active material in the technical solution of this application, so that the electrochemical performance of the sodium ion secondary battery is improved, which facilitates wide application.

With reference to the above implemented content, to make the technical solution of this application more specific, clear and easy to understand, examples are given to the technical solution of this application. But it needs to be noted that the content to be protected by this application is not limited to the examples below.

Example 1

The example provides a cathode active material and a preparation method therefor. The preparation includes the following steps:

56.3 g of anhydrous sodium carbonate and 130.2 g of a nickel, ferric, and manganese-based precursor (the molar ratio of Ni: Fe: Mn was 1: 1: 2) prepared by a coprecipitation method were uniformly mixed through a high speed mixer to obtain a sintered precursor; and
the sintered precursor was put in an oven type atmosphere furnace for high-temperature calcining at 850°C in an oxygen atmosphere for 14 h, and the sintered precursor was crushed and screened to obtain a layered oxide material $Na_{0.7}Ni_{0.25}Fe_{0.25}Mn_{0.5}O_2$.

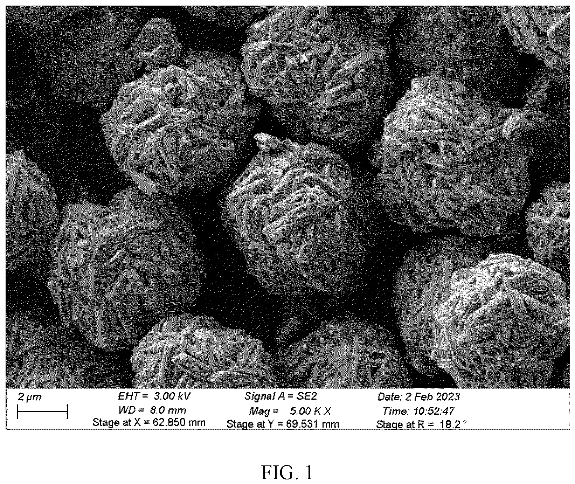

The cathode active material prepared in example 1 is characterized by a scanning electron microscope to obtain FIG. 1. It can be seen from FIG. 1 that the cathode active material prepared in example 1 is a secondary agglomerate. After the test, the particle size D50 of the cathode active material is =6.8 $\mu$m, the specific surface area SSA is =0.6 m$^2$/g, the tap density TD is =1.9 g/cm$^3$, and pH is =12.7.

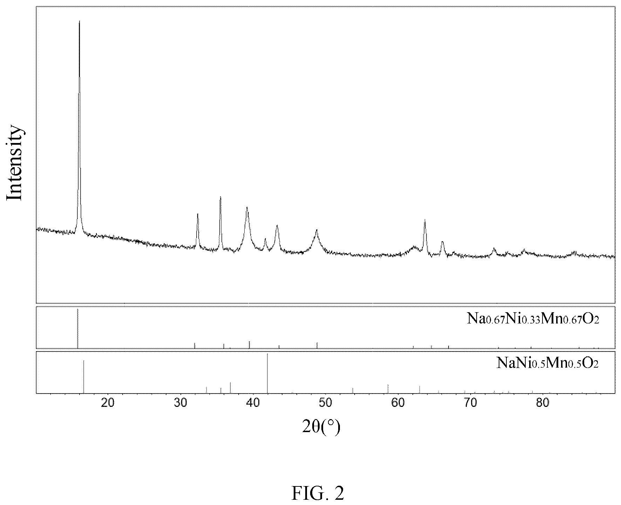

The cathode active material prepared in example 1 is diffracted by an X ray to obtain FIG. 2. It can be seen from FIG. 2 that the principle phase of the cathode active material prepared in example 1 is a P2 phase with a space group being P63/mmc, the secondary phase thereof is an O3 phase with a space group being R-3m, and the peak-to-intensity ratio of the diffraction peak corresponding to the crystal face of its O3 phase (104) and the diffraction peak corresponding to the crystal face of its P2 phase (002) after removing the background is 0.05, $\delta=I_p/I_O=20$. Specifically, the cation potential

$$\emptyset = \frac{\emptyset_{TM}\emptyset_{Na}}{\emptyset_O{}^2} = 0.476 = T$$ of the cathode active material is $\omega = \frac{1}{0.7 \times 20 + 1} = 0.067$ .

Example 2

The example provides a cathode active material and a preparation method therefor. The preparation includes the following steps:

56.3 g of anhydrous sodium carbonate and 26.97g of nickel oxide, 28.85 g of ferric oxide, and 62.82 g of manganese oxide were uniformly mixed through a high speed mixer to obtain a sintered precursor; and
the sintered precursor was put in an oven type atmosphere furnace for high-temperature calcining at 870°C in an oxygen atmosphere for 12 h, and the sintered precursor was crushed and screened to obtain a layered oxide material $Na_{0.7}Ni_{0.25}Fe_{0.25}Mn_{0.5}O_2$.

The cathode active material prepared in example 2 is a secondary agglomerate. After the test, the particle size D50 of the cathode active material is =7.2 $\mu$m, the specific surface area SSA is =0.5 m$^2$/g, the tap density TD is =1.9 g/cm$^3$, and pH is =12.8.

The principle phase of the cathode active material prepared in example 2 is a P2 phase with a space group being P63/mmc, the secondary phase thereof is an O3 phase with a space group being R-3m, and the peak-to-intensity ratio of the diffraction peak corresponding to the crystal face of its O3 phase (104) and the diffraction peak corresponding to the crystal face of its P2 phase (002) after removing the background is 0.06, $\delta=I_p/I_O=16.7$. Specifically, the cation potential

$$\emptyset = \frac{\emptyset_{TM}\emptyset_{Na}}{\emptyset_O{}^2} = 0.476 = T$$

of the cathode active material is $\omega = \frac{1}{0.7 \times 16.7 + 1} = 0.079$.

Example 3

The example provides a cathode active material and a preparation method therefor. The preparation includes the following steps:

61.56 g of anhydrous sodium carbonate, 130.2 g of a nickel, ferric, and manganese-based precursor (the molar ratio of Ni: Fe: Mn was 1: 1: 2) prepared by a coprecipitation method, and a precursor of doping elements (0.75 mol% of lithium carbonate and 2 mol% of magnesium oxide) were uniformly mixed through a high speed mixer to obtain a sintered precursor; and

the sintered precursor was put in an oven type atmosphere furnace for high-temperature calcining at 850°C in an oxygen atmosphere for 12 h, and the sintered precursor was crushed and screened to obtain a layered oxide material $Na_{0.75}Ni_{0.24}Fe_{0.24}Mn_{0.48}Li_{0.015}Mg_{0.025}O_2$.

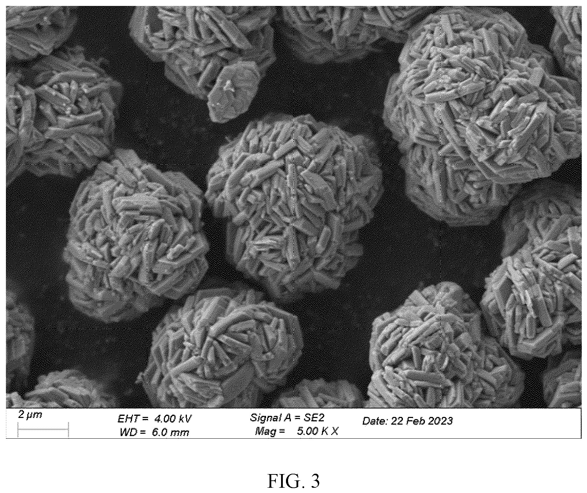

The cathode active material prepared in example 3 is characterized by a scanning electron microscope to obtain FIG. 3. It can be seen from FIG. 3 that the cathode active material prepared in example 3 is a secondary agglomerate. After the test, the particle size D50 of the cathode active material is =6.4$\mu$m, the specific surface area SSA is =0.6 m$^2$/g, the tap density TD is =1.9 g/cm$^3$, and pH is =12.8.

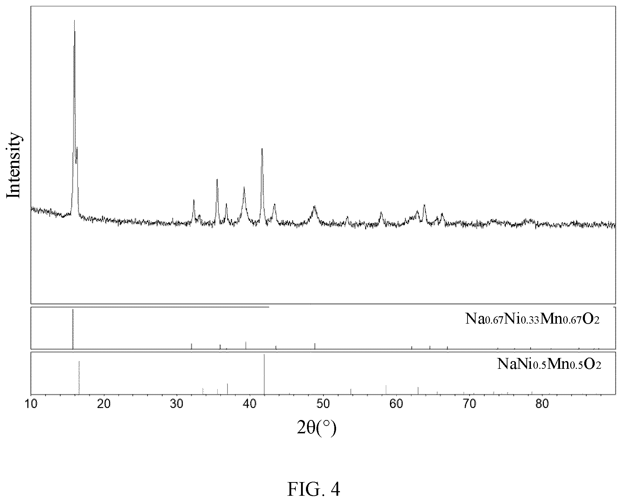

The cathode active material prepared in example 3 is diffracted by an X ray to obtain FIG. 4. It can be seen from FIG. 4 that the principle phase of the cathode active material prepared in example 3 is a P2 phase with a space group being P63/mmc, the secondary phase thereof is an O3 phase with a space group being R-3m, and the peak-to-intensity ratio of the diffraction peak corresponding to the crystal face of its O3 phase (104) and the diffraction peak corresponding to the crystal face of its P2 phase (002) after removing the background is 0.45, $\delta = I_p/I_O = 2.22$. Specifically, the cation potential of the cathode active material is $\emptyset = \frac{\emptyset_{TM}\emptyset_{Na}}{\emptyset_O{}^2} = 0.4975$, where $\omega = 0.449$.

Example 4

The example provides a cathode active material and a preparation method therefor. The preparation includes the following steps:

61.04 g of anhydrous sodium carbonate, 33.47 g of nickelous hydroxide, 28.85 g of ferric oxide, 64.27 g of manganese hydroxide, and a precursor of doping elements (0.75 mol% of lithium carbonate and 2.5 mol% of magnesium oxide) were uniformly mixed through a high speed mixer to obtain a sintered precursor; and

the sintered precursor was put in an oven type atmosphere furnace for high-temperature calcining at 890°C in an oxygen atmosphere for 12 h, and the sintered precursor was crushed and screened to obtain a layered oxide material $Na_{0.75}Ni_{0.24}Fe_{0.24}Mn_{0.48}Li_{0.015}Mg_{0.025}O_2$.

The cathode active material prepared in example 4 is a secondary agglomerate. After the test, the particle size D50 of the cathode active material is =8 $\mu$m, the specific surface area SSA is =0.4 m$^2$/g, the tap density TD is =2.0 g/cm$^3$, and pH is =12.4.

The principle phase of the cathode active material prepared in example 4 is a P2 phase with a space group being P63/mmc, the secondary phase thereof is an O3 phase with a space group being R-3m, and the peak-to-intensity ratio of the diffraction peak corresponding to the crystal face of its O3 phase (104) and the diffraction peak corresponding to the crystal face of its P2 phase (002) after removing the background is 0.43, $\delta = I_p/I_O = 2.32$. Specifically, the cation potential of the cathode active material is $\emptyset = \frac{\emptyset_{TM}\emptyset_{Na}}{\emptyset_O{}^2} = 0.4975$, where $\omega = 0.438$.

Example 5

The example provides a cathode active material and a preparation method therefor. The preparation includes the following steps:

62.79 g of anhydrous sodium carbonate, 130.2 g of a nickel, ferric, and manganese-based precursor (the molar ratio of Ni: Fe: Mn was 1: 1: 2) prepared by a coprecipitation method, and a precursor of doping elements (1 mol% of potassium carbonate and 2 mol% of magnesium oxide) were uniformly mixed through a high speed mixer to obtain a sintered precursor; and

the sintered precursor was put in an oven type atmosphere furnace for high-temperature calcining at 860°C in an oxygen atmosphere for 16 h, and the sintered precursor was crushed and screened to obtain a layered oxide material $Na_{0.75}Ni_{0.24}Fe_{0.24}Mn_{0.48}K_{0.02}Mg_{0.02}O_2$.

The cathode active material prepared in example 5 is a secondary agglomerate. After the test, the particle size D50 of the cathode active material is =6.8 $\mu$m, the specific surface area SSA is =0.3 $m^2$/g, the tap density TD is =1.85 g/$cm^3$, and pH is =12.5.

The principle phase of the cathode active material prepared in example 5 is a P2 phase with a space group being P63/mmc, the secondary phase thereof is an O3 phase with a space group being R-3m, and the peak-to-intensity ratio of the diffraction peak corresponding to the crystal face of its O3 phase (104) and the diffraction peak corresponding to the crystal face of its P2 phase (002) after removing the background is 0.46, $\delta=I_p/I_O=2.17$. Specifically, the cation potential of the cathode active material is

$$\emptyset = \frac{\emptyset_{TM}\emptyset_{Na}}{\emptyset_O{}^2} = 0.4958$$

, where $\omega=0.45$.

Example 6

The example provides a cathode active material and a preparation method therefor. The preparation includes the following steps:

84.11 g of sodium sulfate, 26.97 g of nickel oxide, 28.85 g of ferric oxide, 64.27 g of manganese hydroxide, and a precursor of doping elements (1 mol% of potassium sulfide and 2 mol% of magnesium carbonate) were uniformly mixed through a high speed mixer to obtain a sintered precursor; and

the sintered precursor was put in an oven type atmosphere furnace for high-temperature calcining at 900°C in an oxygen atmosphere for 13 h, and the sintered precursor was crushed and screened to obtain a layered oxide material $Na_{0.75}Ni_{0.24}Fe_{0.24}Mn_{0.48}K_{0.02}Mg_{0.02}O_2$.

The cathode active material prepared in example 6 is a secondary agglomerate. After the test, the particle size D50 of the cathode active material is =9 $\mu$m, the specific surface area SSA is =0.4 $m^2$/g, the tap density TD is =2.0 g/$cm^3$, and pH is =12.5.

The principle phase of the cathode active material prepared in example 6 is a P2 phase with a space group being P63/mmc, the secondary phase thereof is an O3 phase with a space group being R-3m, and the peak-to-intensity ratio of the diffraction peak corresponding to the crystal face of its O3 phase (104) and the diffraction peak corresponding to the crystal face of its P2 phase (002) after removing the background is 0.47, $\delta=I_p/I_O=2.13$. Specifically, the cation potential of the cathode active material is

$$\emptyset = \frac{\emptyset_{TM}\emptyset_{Na}}{\emptyset_O{}^2} = 0.4958$$

, where $\omega=0.455$.

Example 7

The example provides a cathode active material and a preparation method therefor. The preparation includes the following steps:

66.99 g of anhydrous sodium carbonate, 130.2 g of a nickel, ferric, and manganese-based precursor (the molar ratio of Ni: Fe: Mn was 1: 1: 2) prepared by a coprecipitation method, and a precursor of doping elements (5mol% of copper oxide and 5mol% of magnesium oxide) were uniformly mixed through a high speed mixer to obtain a sintered precursor; and

the sintered precursor was put in an oven type atmosphere furnace for high-temperature calcining at 800°C in an air atmosphere for 18 h, and the sintered precursor was crushed and screened to obtain a layered oxide material $Na_{0.75}Ni_{0.225}Fe_{0.225}Mn_{0.45}Cu_{0.05}Mg_{0.05}O_2$.

The cathode active material prepared in example 7 is a secondary agglomerate. After the test, the particle size D50 of the cathode active material is =9.2 $\mu$m, the specific surface area SSA is =0.36 $m^2$/g, the tap density TD is =1.9 g/$cm^3$, and pH is =12.3.

The principle phase of the cathode active material prepared in example 7 is a P2 phase with a space group being P63/mmc, the secondary phase thereof is an O3 phase with a space group being R-3m, and the peak-to-intensity ratio of the diffraction peak corresponding to the crystal face of its O3 phase (104) and the diffraction peak corresponding to the crystal face of its P2 phase (002) after removing the background is 0.36, $\delta=I_p/I_O=2.78$. Specifically, the cation potential of the cathode active material is

$$\emptyset = \frac{\emptyset_{TM}\emptyset_{Na}}{{\emptyset_O}^2} = 0.4837$$

, where $\omega=0.359$.

Example 8

The example provides a cathode active material and a preparation method therefor. The preparation includes the following steps:

89.04 g of anhydrous sodium carbonate, 29.88 g of nickel oxide, 28.8 g of ferrous oxide, 100.1 g of manganese oxide, and a precursor of doping elements (2.5 mol% of calcium hydroxide and 2.5 mol% of strontium hydroxide) were uniformly mixed through a high speed mixer to obtain a sintered precursor; and
the sintered precursor was put in an oven type atmosphere furnace for high-temperature calcining at 820°C in an air atmosphere for 24 h, and the sintered precursor was crushed and screened to obtain a layered oxide material $Na_{0.8}Ni_{0.2}Fe_{0.2}Mn_{0.55}Ca_{0.025}Sr_{0.025}O_2$.

The cathode active material prepared in example 8 is a secondary agglomerate. After the test, the particle size D50 of the cathode active material is $=10.4\ \mu m$, the specific surface area SSA is $=0.38\ m^2/g$, the tap density TD is $=2.0$ $g/cm^3$, and pH is $=12.4$.

The principle phase of the cathode active material prepared in example 8 is a P2 phase with a space group being P63/mmc, the secondary phase thereof is an O3 phase with a space group being R-3m, and the peak-to-intensity ratio of the diffraction peak corresponding to the crystal face of its O3 phase (104) and the diffraction peak corresponding to the crystal face of its P2 phase (002) after removing the background is 0.24, $\delta=I_p/I_O=7.143$. Specifically, the cation potential of the cathode active material is

$$\emptyset = \frac{\emptyset_{TM}\emptyset_{Na}}{{\emptyset_O}^2} = 0.5528$$

, where $\omega=0.318$.

Example 9

The example provides a cathode active material and a preparation method therefor. The preparation includes the following steps:

56.61 g of anhydrous sodium carbonate, 130.2 g of a nickel, ferric, and manganese-based precursor (the molar ratio of Ni: Fe: Mn was 1: 1: 2) prepared by a coprecipitation method, and a precursor of doping elements (1 mol% of zinc oxide) were uniformly mixed through a high speed mixer to obtain a sintered precursor; and
the sintered precursor was put in an oven type atmosphere furnace for high-temperature calcining at 850°C in an air atmosphere for 16 h, and the sintered precursor was crushed and screened to obtain a layered oxide material $Na_{0.7}Ni_{0.248}Fe_{0.248}Mn_{0.494}Zn_{0.01}O_2$.

The cathode active material prepared in example 9 is a secondary agglomerate. After the test, the particle size D50 of the cathode active material is $=8.2\ \mu m$, the specific surface area SSA is $=0.46\ m^2/g$, the tap density TD is $=1.95$ $g/cm^3$, and pH is $=12.4$.
The principle phase of the cathode active material prepared in example 9 is a P2 phase with a space group being P63/mmc, the secondary phase thereof is an O3 phase with a space group being R-3m, and the peak-to-intensity ratio of the diffraction peak corresponding to the crystal face of its O3 phase (104) and the diffraction peak corresponding to the crystal face of its P2 phase (002) after removing the background is 0.15, $\delta=Ip/I_O=6.67$. Specifically, the cation potential of the cathode active material is

$$\emptyset = \frac{\emptyset_{TM}\emptyset_{Na}}{{\emptyset_O}^2} = 0.4734$$

, where $\omega=0.172$.

Comparative example 1

The comparative example provides a cathode active material and a preparation method therefor. The preparation includes the following steps:

60.3 g of anhydrous sodium carbonate and 130.2 g of a nickel, ferric, and manganese-based precursor (the molar ratio of Ni: Fe: Mn was 1: 1: 2) prepared by a coprecipitation method were uniformly mixed through a high speed mixer to obtain a sintered precursor; and
the sintered precursor was put in an oven type atmosphere furnace for high-temperature calcining at 850°C in an oxygen atmosphere for 14 h, and the sintered precursor was crushed and screened to obtain a layered oxide material $Na_{0.75}Ni_{0.25}Fe_{0.25}Mn_{0.5}O_2$.

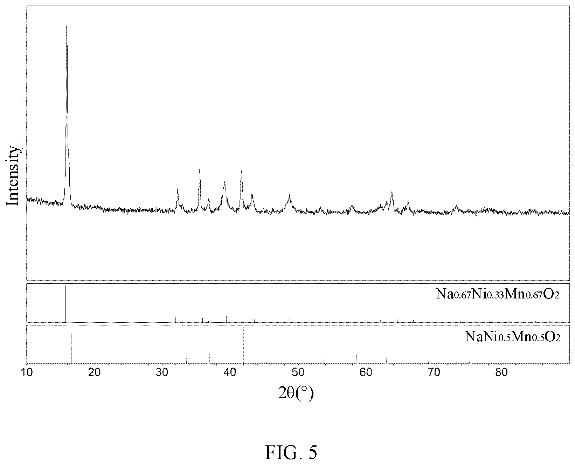

The cathode active material prepared in comparative example 1 is diffracted by an X ray to obtain FIG. 5. It can be seen from FIG. 5 that the principle phase of the cathode active material prepared in comparative example 1 is a P2 phase with a space group being P63/mmc, the secondary phase thereof is an O3 phase with a space group being R-3m, and the peak-to-intensity ratio of the diffraction peak corresponding to the crystal face of its O3 phase (104) and the diffraction peak corresponding to the crystal face of its P2 phase (002) after removing the background is 0.48, $\delta=I_p/I_O=2.083$. Specifically, the cation potential of the cathode active material is

$$\varnothing = \frac{\varnothing_{TM}\varnothing_{Na}}{\varnothing_O{}^2} = 0.5099$$

where $\omega=0.4989$.

Comparative example 2

The comparative example provides a cathode active material and a preparation method therefor. The preparation includes the following steps:

74.2 g of anhydrous sodium carbonate, 44.82 g of nickel oxide, 31.96 g of ferric oxide, 52.2 g of manganese oxide, and a precursor of doping elements (20 mol% of tin oxide) were uniformly mixed through a high speed mixer to obtain a sintered precursor; and
the sintered precursor was put in an oven type atmosphere furnace for high-temperature calcining at 850°C in an oxygen atmosphere for 16 h, and the sintered precursor was crushed and screened to obtain a layered oxide material $Na_{0.67}Ni_{0.3}Fe_{0.2}Mn_{0.3}Sn_{0.2}O_2$.

The principle phase of the cathode active material prepared in comparative example 2 is an O3 phase with a space group being R-3m, the secondary phase thereof is a P2 phase with a space group being P63/mmc, and the peak-to-intensity ratio of the diffraction peak corresponding to the crystal face of its O3 phase (104) and the diffraction peak corresponding to the crystal face of its P2 phase (002) after removing the background is 1.56, $\delta=I_p/I_O=0.641$.

Specifically, the cation potential of the cathode active material is $\varnothing = \frac{\varnothing_{TM}\varnothing_{Na}}{\varnothing_O{}^2} = 0.4182$, where $\omega=0.541$.

Comparative example 3

The comparative example provides a cathode active material and a preparation method therefor. The preparation includes the following steps:

72.35 g of anhydrous sodium carbonate and 130.2 g of a nickel, ferric, and manganese-based precursor (the molar ratio of Ni: Fe: Mn was 1: 1: 2) prepared by a coprecipitation method were uniformly mixed through a high speed mixer to obtain a sintered precursor; and
the sintered precursor was put in an oven type atmosphere furnace for high-temperature calcining at 870°C in an oxygen atmosphere for 14 h, and the sintered precursor was crushed and screened to obtain a layered oxide material $Na_{0.9}Ni_{0.25}Fe_{0.25}Mn_{0.5}O_2$.

The principle phase of the cathode active material prepared in comparative example 2 is an O3 phase with a space group being R-3m, the secondary phase thereof is a P2 phase with a space group being P63/mmc, and the peak-to-intensity ratio of the diffraction peak corresponding to the crystal face of its O3 phase (104) and the diffraction peak corresponding to the crystal face of its P2 phase (002) after removing the background is 20, $\delta=I_p/I_O=0.05$.

Specifically, the cation potential of the cathode active material is $\varnothing = \frac{\varnothing_{TM}\varnothing_{Na}}{\varnothing_O{}^2} = 0.6119$, where $\omega=0.992$.

Performance test:

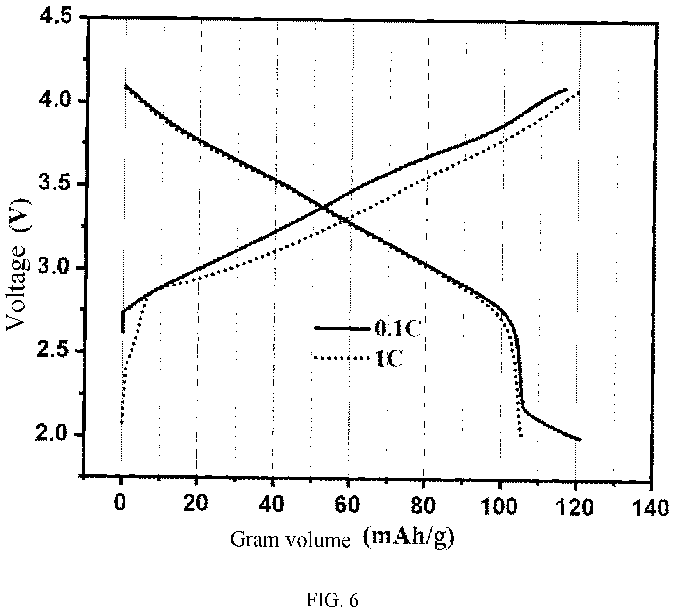

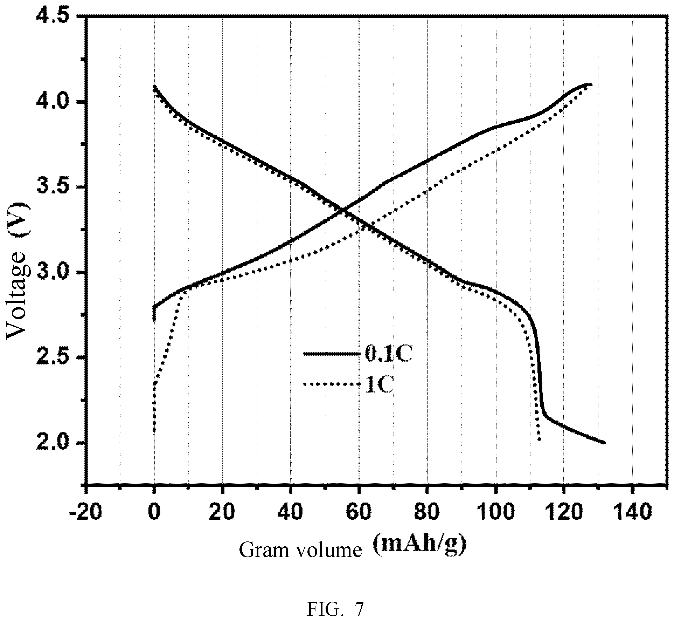

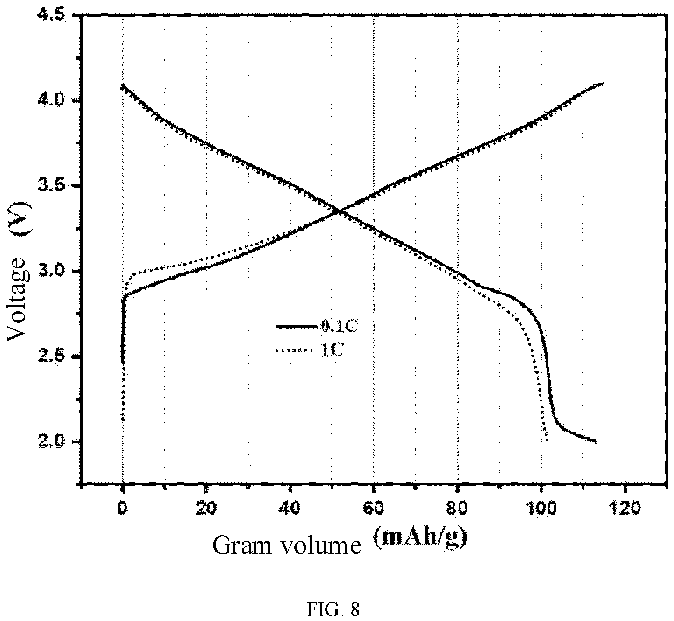

The cathode active materials prepared in examples 1-9 and comparative examples 1-3, PVDF, and conductive carbon dispersed in an NMP solvent are coated to aluminum foil collectors and dried to prepare the cathode plates, and then the cathode plates, sodium sheets, glass fiber diaphragms, washers, reeds, and an NaPF6-DIGLYME electrolyte are prepared into button cells according to a button cell assembly standard operation procedure. Tested by a Neware detection channel, charging and discharging curves at a rate of 2.0-4.1V 0.1C can be obtained. The charging and discharging curves of the button cells prepared by the cathode active materials prepared in examples 1 and 3 and comparative example 1 are shown in FIGs. 6-8. The discharge capacity at 0.1 C rate, the discharge capacity at 1C rate, and the 50-turn cycle retention rate of the button cells prepared by the cathode active materials prepared in examples 1-9 and comparative examples 1-3 are shown in table 1.

Table 1 Performance test data of button cells prepared by cathode active materials prepared in examples 1-9 and comparative examples 1-3

| Performance parameters | Discharge capacity at 0.1C (mAh/g) | Discharge capacity at 1C (mAh/g) | 50-Turn cycle retention rate at 1C |
|---|---|---|---|
| Example 1 | 120 | 107 | 95% |
| Example 2 | 118 | 106 | 94% |
| Example 3 | 130 | 114 | 96% |
| Example 4 | 128 | 113 | 95% |
| Example 5 | 129 | 114 | 96% |
| Example 6 | 126 | 112 | 95% |
| Example 7 | 125 | 110 | 93% |
| Example 8 | 122 | 107 | 95% |
| Example 9 | 121 | 107 | 94% |
| Comparative example 1 | 114 | 102 | 95% |
| Comparative example 2 | 116 | 106 | 92% |
| Comparative example 3 | 125 | 110 | 83% |

It can be seen from table 1 that compared with the cathode active materials prepared in comparative examples 1-3, the button cells prepared by the cathode active materials prepared in examples 1-9 have better discharge capacity and cycle retention rate, indicating that the cathode active material in the technical solution of this application has better electrochemical performance.

The technical features of the above embodiments may be combined freely. In order to describe briefly, the description is not made on all possible combinations of the technical features of the embodiments. However, the combinations of these technical features should be considered as a scope of the specification as long as there is no contradiction.

The above examples merely express several implementations of this application, are described in more detail, but are not to be construed as a limitation to the patent claims of this application. It is to be noted that several variations and modifications may also be made by persons skilled in the art without departing from the spirit of this application, which all fall within the protection scope of this application. Therefore, the protection scope of the patent of this application shall be subjected to the appended claims.

**Claims**

1. A chemical formula of the cathode active material is $Na_xNiaFe_bMn_cM_aO_2$, wherein a+b+c+d=1, $0.7 \leq x < 0.9$, $0.01 \leq a \leq 0.5$, $0.01 \leq b \leq 0.4$, $0.2 \leq c < 1$, $0 \leq d \leq 0.2$; a doping element M is a metal element, a valence state of which is less than or equal to bivalence;

the cathode active material is a layered oxide with a double crystal domain structure; the double crystal domain structure comprises a P2 principal phase and an O3 heterogeneous phase; the crystal domain heterogeneity degree of the cathode active material meets: $0 < \omega \leq 0.48$, $\omega = \dfrac{1}{k \cdot \delta \cdot e^{\varepsilon(\emptyset - T)} + 1}$, wherein $\delta = I_p/I_O$, $I_p$ is a peak intensity of a diffraction peak of the P2 phase structure (002), and $I_O$ is a peak intensity of a diffraction peak of the O3 phase structure (104); $\emptyset = \dfrac{\emptyset_{TM}\emptyset_{Na}}{\emptyset_O{}^2}$ is a cation potential of the cathode material, wherein $\emptyset_{TM}, \emptyset_{Na}, \emptyset_O$ are respectively a non-sodium metallic element ion potential, a Na ion potential, and an oxygen ion potential of the cathode active material, wherein a non-sodium metal comprises Ni, Fe, Mn, and M; a diffraction peak intensity correction factor k is =0.7, an ion potential correction factor $\varepsilon$ is =11, and a constant T is =0.476;

$$\emptyset_{TM} = \sum \frac{\omega_i n_i}{R_i}$$

wherein , $\omega_i$, $n_i$, and $R_i$ are respectively a valence state, a mole percentage, and an ionic radius of the non-sodium metal ions, i is the number of the non-sodium metal ions, $\emptyset_{Na}$=x/RNa, $\emptyset_O$=4/RO.

2. The cathode active material according to claim 1, wherein in the chemical formula $Na_xNi_aFe_bMn_cM_aO_2$ of the cathode active material, the doping element M is selected from at least one of Li, K, Rb, Be, Mg, Ca, Cu, Sr, and Zn.

3. The cathode active material according to claim 1, wherein in the chemical formula $Na_xNi_aFe_bMn_cM_aO_2$ of the cathode active material, $0.7 \leq x \leq 0.8$, $0.01 \leq a \leq 0.4$, $0.01 \leq b \leq 0.35$, $0.3 \leq c, 0.8$, and $0 \leq d \leq 0.1$.

4. The cathode active material according to claim 1, wherein in an X-ray diffraction result of the layered oxide, a peak position of the diffraction peak (002) of the P2 phase is present at $2\theta=15.80\pm0.5°$, and a peak position of the diffraction peak (104) of the O3 phase is present at $2\theta=41.5\pm0.5°$.

5. The cathode active material according to claim 1, wherein a particle size D50 of the cathode active material is 3-15 $\mu$m; and
a specific surface area of the cathode active material is 0.2-0.8 m$^2$/g.

6. The cathode active material according to claim 1, wherein pH of the cathode active material is 11-13.

7. The cathode active material according to claim 1, wherein a tap density of the cathode active material is 1.6 g/cm$^3$.

8. The cathode active material according to claim 1, wherein a mass content of $CO_3^{2-}$ in the cathode active material is $\leq 2$ wt%, and a mass content of OH$^-$ in the cathode material is $\leq$ 2wt%; and
a mass content of water in the cathode active material is $\leq$0.05 wt%.

9. A cathode plate, comprising the cathode active material according to any one of claims 1-8.

10. A sodium ion secondary battery, comprising the cathode plate according to claim 9.

| 2 µm | EHT = 3.00 kV | Signal A = SE2 | Date: 2 Feb 2023 |
| | WD = 8.0 mm | Mag = 5.00 K X | Time: 10:52:47 |
| | Stage at X = 62.850 mm | Stage at Y = 69.531 mm | Stage at R = 18.2 ° |

FIG. 1

FIG. 2

| 2 µm | EHT = 4.00 kV | Signal A = SE2 | Date: 22 Feb 2023 |
| | WD = 6.0 mm | Mag = 5.00 K X | |

FIG. 3

FIG. 4

FIG. 5

FIG. 6

FIG. 7

FIG. 8

## INTERNATIONAL SEARCH REPORT

| International application No. |
|---|
| **PCT/CN2024/110617** |

**A.    CLASSIFICATION OF SUBJECT MATTER**

C01G53/00(2006.01)i;  H01M4/525(2010.01)i;  H01M4/505(2010.01)i;  H01M10/054(2010.01)i;  H01M4/62(2006.01)i;  H01M4/131(2010.01)i;  C01G53/00(2006.01)i

According to International Patent Classification (IPC) or to both national classification and IPC

**B.    FIELDS SEARCHED**

Minimum documentation searched (classification system followed by classification symbols)

IPC: C01G; H01M

Documentation searched other than minimum documentation to the extent that such documents are included in the fields searched

Electronic data base consulted during the international search (name of data base and, where practicable, search terms used)

CNTXT, VCN, ENTXT, VEN, ENTXT, DWPI, CJFD: 钠离子, 电池, 活性材料, 层状, 氧化物, 掺杂, 异质, P2, O3, 双相, 双晶, 混合相, sodium ion, battery, active w material, dop+, heterogeneous, double w phase, double w domain, hybrid w phase, layer+, oxide

**C.    DOCUMENTS CONSIDERED TO BE RELEVANT**

| Category* | Citation of document, with indication, where appropriate, of the relevant passages | Relevant to claim No. |
|---|---|---|
| PX | CN 116873988 A (SHENZHEN BTR NEW ENERGY TECHNOLOGY RESEARCH INSTITUTE CO., LTD.) 13 October 2023 (2023-10-13)<br>description, paragraphs 21-51 | 1-10 |
| X | CN 109585795 A (INSTITUTE OF PHYSICS, CHINESE ACADEMY OF SCIENCES) 05 April 2019 (2019-04-05)<br>table 1, embodiment 6, description, paragraphs 5-44, and figure 1 | 1-10 |
| A | CN 112262109 A (FARADION LTD.) 22 January 2021 (2021-01-22)<br>claims 1-7, and table 1 | 1-10 |
| A | CN 116425212 A (BEIHANG UNIVERSITY) 14 July 2023 (2023-07-14)<br>claims 1-10, and the embodiments | 1-10 |
| A | CN 116573683 A (BEIHANG UNIVERSITY) 11 August 2023 (2023-08-11)<br>claims 1-15, and the embodiments | 1-10 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **01 November 2024** | **07 November 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

<div align="center">

**INTERNATIONAL SEARCH REPORT**

</div>

| | International application No. |
|---|---|
| | **PCT/CN2024/110617** |

**C.    DOCUMENTS CONSIDERED TO BE RELEVANT**

| Category* | Citation of document, with indication, where appropriate, of the relevant passages | Relevant to claim No. |
|---|---|---|
| A | JP 2014086279 A (NATIONAL INSTITUTE OF ADVANCED INDUSTRIAL & TECHNOLOGY) 12 May 2014 (2014-05-12) claims 1-5, and the embodiments | 1-10 |
| A | US 2023238518 A1 (CONTEMPORARY AMPEREX TECHNOLOGY CO., LTD.) 27 July 2023 (2023-07-27) entire document | 1-10 |

Form PCT/ISA/210 (second sheet) (July 2022)

**INTERNATIONAL SEARCH REPORT**
Information on patent family members

International application No.

**PCT/CN2024/110617**

| Patent document cited in search report | | | Publication date (day/month/year) | Patent family member(s) | | | Publication date (day/month/year) |
|---|---|---|---|---|---|---|---|
| CN | 116873988 | A | 13 October 2023 | CN | 116873988 | B | 29 December 2023 |
| CN | 109585795 | A | 05 April 2019 | None | | | |
| CN | 112262109 | A | 22 January 2021 | PH | 12020551622 | A1 | 12 July 2021 |
| | | | | US | 2021155501 | A1 | 27 May 2021 |
| | | | | SG | 11202009654 | PA | 29 October 2020 |
| | | | | WO | 2019197812 | A1 | 17 October 2019 |
| | | | | KR | 20200141457 | A | 18 December 2020 |
| | | | | GB | 201805884 | D0 | 23 May 2018 |
| | | | | JP | 2021520333 | A | 19 August 2021 |
| | | | | JP | 7236459 | B2 | 09 March 2023 |
| | | | | EP | 3774663 | A1 | 17 February 2021 |
| | | | | EP | 3774663 | B1 | 02 August 2023 |
| | | | | EP | 3774663 | B8 | 06 September 2023 |
| | | | | EP | 4253330 | A2 | 04 October 2023 |
| | | | | EP | 4253330 | A3 | 20 December 2023 |
| | | | | AU | 2019253500 | A1 | 08 October 2020 |
| | | | | AU | 2019253500 | B2 | 28 March 2024 |
| | | | | VN | 75800 | A | 25 February 2021 |
| | | | | ID | 202102045 | A1 | 30 March 2021 |
| | | | | PH | 12020551622 | A1 | 19 August 2021 |
| | | | | IN | 202017043775 | A | 24 September 2021 |
| | | | | IN | 425071 B | B | 17 March 2023 |
| CN | 116425212 | A | 14 July 2023 | None | | | |
| CN | 116573683 | A | 11 August 2023 | None | | | |
| JP | 2014086279 | A | 12 May 2014 | JP | 6083556 | B2 | 22 February 2017 |
| US | 2023238518 | A1 | 27 July 2023 | EP | 4235897 | A1 | 30 August 2023 |
| | | | | EP | 4235897 | A4 | 02 October 2024 |
| | | | | WO | 2023123049 | A1 | 06 July 2023 |

Form PCT/ISA/210 (patent family annex) (July 2022)

**EP 4 545 485 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311151572